# EUROPÄISCHE PATENTSCHRIFT

(11) **EP 0 906 365 B1**
(45) Veröffentlichungstag und Bekanntmachung des Hinweises auf die Patenterteilung: **09.04.2003**
(21) Anmeldenummer: 97928168.0
(22) Anmeldetag: 10.06.1997
(51) Int. Cl.: C08J 11/06, C08K 5/09

(54) **KUNSTSTOFF-RECYCLINGVERFAHREN UND VERFAHREN ZUR HERSTELLUNG VON KUNSTSTOFFWERKSTOFFEN**
PLASTIC RECYCLING PROCESS AND PROCESS FOR PRODUCING PLASTIC MATERIALS
PROCEDE DE RECYCLAGE DE PLASTIQUE ET PROCEDE POUR PRODUIRE DES MATERIAUX PLASTIQUES

(30) Priorität: 17.06.1996 DE 19625110
(43) Veröffentlichungstag der Anmeldung: 07.04.1999
(73) Patentinhaber: Finacor Anstalt, 9490 Vaduz (LI)
(72) Erfinder: SCHALLENBERG, Günter, D-52499 Baesweiler (DE)
(74) Vertreter: UEXKÜLL & STOLBERG
(86) Internationale Anmeldenummer: EP9703002
(87) Internationale Veröffentlichungsnummer: WO97048761

(56) Entgegenhaltungen:
- WO-A-92/15640
- DD-A- 130 863
- DATABASE WPI Section Ch, Week 9301 Derwent Publications Ltd., London, GB; Class A18, AN 93-005146 XP002046420 & JP 04 333 670 A (AICHI SEIKO KK) , 20.November 1992

## Beschreibung

Die Patentanmeldung betrifft ein Verfahren zum Recycling und/oder Herstellen von Kunststoffen bzw. neuen Kunststoffgemischen und -werkstoffen unter Verwendung von neuen, aufgearbeiteten oder alten Kunststoffen und Kunststoffgemischen sowie sortierten und unsortierten Kunststoffabfällen, bei denen der Grad der Sortenreinheit und Typengleicheit der Kunststoffe nicht vorgegeben ist.

Jährlich werden große Mengen Kunststoff verschiedenster Art produziert, wobei ein Großteil davon nach jeweiligem Gebrauch für den vorbestimmten Einsatzzweck als Abfall auf Deponien endgelagert, in Müllverbrennungsanlagen thermisch entsorgt und damit dem Materialkreislauf entzogen wird. Ähnlich sehen die Verhältnisse bei anderen Materialien aus. Auch dabei geht ein großer Teil an kostbaren, wiederverwertbaren Stoffen verloren.

Seit längerem ist die Gewinnung und Verwertung von sogenannten Werkstoffen aus Abfallprodukten auf dem Vormarsch. Beispielsweise wird vielerorts ein getrenntes Sammeln und/oder Sortieren verschiedener Abfallmaterialien propagiert und durchgeführt, da die Aufarbeitung und Rückgewinnung der darin enthaltenen Wertstoffe bzw. die Gewinnung daraus erhältlicher Werkstoffe preiswerter ist als bei wahllos zusammengesetzten Müll- oder Abfallgemischen. Im Endeffekt kann der täglich produzierte Haus- und Gewerbemüll als "Rohstoff" angesehen werden, wobei im Einzelfall jedoch die mangelnde Sortenreinheit erhebliche Probleme mit sich bringt. Dies gilt insbesondere für das Kunststoffrecycling.

Bisher ist es unmöglich gewesen, gemischte Kunststoffabfälle werkstofflich zu verwerten, sofern die Unterschiede in den Kunststoffen einen gewissen Grad überschreiten (siehe A. Jungbauer, Recycling von Kunststoffen, 1. Auflage, Würzburg, Vogelverlag, 1994, insbesondere S. 40 ff). Aus diesem Grunde ist es bisher zwingend erforderlich gewesen, Kunststoffmischfraktionen sauber in die jeweiligen sorten- und typenreinen Kunststoffe zu trennen und dann diese sortierten Fraktionen den jeweiligen dafür geeigneten Recyclingverfahren zuzuführen. Es sind allenfalls Gemische von gleichen oder recht ähnlichen Kunststoffmaterialien tolerierbar gewesen. Eine solche Müllsortierung, insbesondere eine Kunststoff müllsortierung ist jedoch arbeits- und kostenintensiv, so daß die Recyclingverfahren bzw. die mit den jeweils dabei gewonnenen Materialien hergestellten Produkte vergleichsweise teuer sind. Bekanntermaßen ist die Sortierung von Kunststoffabfällen im Haushalt- und Gewerbemüll problematisch und nur schwierig bzw. eingeschränkt durchführbar.

Die Zusammensetzung der Kunststoffabfälle im Haushalt- und Gewerbemüll ist äußerst variabel und kann auf mehreren Dutzenden von verschiedenen Kunststofftypen und -sorten bestehen, wobei nach dem heutigen Stand des Wissens die Zusammensetzung der Kunststoffabfälle regional ganz verschieden sein kann. Es wird angenommen, daß durchschnittlich die folgenden Kunststoffsorten darin vorkommen:

| | |
|---|---|
| Polyethylen (LDPE, MDPE und HDPE) | ca. 30% |
| Polypropylen PP | ca. 10% |
| Polyvinylchlorid (PVC) | ca. 15% |
| Polystyrole (PS, EPS, ABS, ASA) | ca. 15% |
| Polyamid (PA 6, PA 6,6 usw.) | ca. 10% |
| andere technische Thermoplaste | ca. 10% |
| Duroplaste und Verbundwerkstoffe | ca. 10% |

Dies alles ist mit Farbresten, Papier, Kleberesten, Beschichtungen und anderen Stoffen stark verunreigt. Die Trennung solcher komplexen Gemischen ist sogar bei vertretbarem Kostenaufwand häufig unmöglich.

Für ein hochwertiges Recycling von diesen Kunststoffen ist jedoch bisher Sauberkeit und Typen- und Sortenreinheit zwingend erforderlich gewesen. Nur in niederwertigen Anwendungen sind vermischte Kunststoffabfälle bedingt einsetzbar. Jede Vermischung von Kunststoffsorten macht jedoch, wie oben dargelegt, die Verarbeitung zu qualitativ hochwertigen Produkten schwierig und teuer bzw. sogar unmöglich. Eine Vermischung mit bestimmten Kunststoffsorten wie beispielsweise PVC macht eine Wiederverwertung sogar fast unmöglich.

Der Erfindung hat daher die Aufgabe zugrundegelegen, eine Möglichkeit zur Aufarbeitung und insbesondere ein Verfahren zum Recycling und zur Verwertung von Kunststoffabfall enthaltenden Gemischen oder zur Verwertung neuhergestellter Kunststoffe und vorzugsweise gleichzeitig ein Verfahren zur Herstellung eines neuen Werkstoffs unter Verwendung solcher neuhergestellten oder gebrauchten Kunststoffe zur Verfügung zu stellen, bei dem eine Sortenreinheit bzw. Typenreinheit der Kunststoffe nicht erforderlich ist und trotzdem qualitativ hochwertige Materialien und Produkte hergestellt werden können. Dieses Recyclingverfahren soll darüber hinaus erheblich preiswerter sein als die bisherigen Verfahren und gleichzeitig auch die gleichzeitige Verwertung von anderen Abfallmaterialien umfassen können.

Diese Aufgabe wird erfindungsgemäß durch ein Verfahren zur Herstellung eines Werkstoffs aus Gemischen, die neuhergestelltes Kunststoffmaterial oder Kunststoffabfallmaterial umfassen, gelöst (d.h. Verwendung neuer Kunststoffe oder Recycling gebrauchter oder sonstiger Abfallkunststoffe), bei dem
a) ein Trägermaterial A, das ein einheitlichen sortenreinen Kunststoff oder verschiedenartige Kunststoffe umfassendes, neuhergestelltes Kunststoffmaterial oder Kunststoffabfallmaterial umfaßt und neben der Kunststoff umfassenden Komponente bezogen auf das Volumen bis zu 10 % an anderem Material als Verunreinigung enthält, ein Material beliebiger oder unbekannter Zusammensetzung X, das ausgewählt ist aus Kunststoff enthaltendem Abfallmaterial, das von der Kunststoff enthaltenden Komponente des Trägennaterials A verschiedenen ist, Hausmüll, Sperrmüll, Papier und Pappe, insbesondere Altpapier, kunststoffbeschichteter Pappe und kunststoffbeschichtetem Altpapier, Deponiemüll, Metall, Holz und Holzresten, Sägemehl, Gummimaterialien und Glasfasern, und eine Zusatzkomponente Z ausgewählt aus Fettsäuren, Fettsäure enthaltenden Gemischen natürlichen oder synthetischen Ursprungs, unter den verfahrensbedingungen Fettsäure freisetzenden Fettsäurederivaten und Fettalkoholen, bezogen auf das Volumen der Mischung aus A und X in einer Menge von 0,01 bis 10 % miteinander gemischt werden, wobei das Volumenverhältnis von A zu X 1 : 50 bis 50 : 1 beträgt und die Mischung von A und X mindestens 50 Vol.% Kunststoff enthält, wodurch die kunststoffremden Komponenten darin noch unter Bildung einer homogenen oder teilhomogenen Masse eingebunden werden,
b) dieses Gemisch unter fortgesetztem mechanischem vermischen, Kneten oder Zusammenpressen durch eine Fördervorrichtung transportiert und entlang des Transportweges einer abschnittsweise erfolgenden mehrstufigen thermischen Behandlung unterzogen wird, wobei die Korngröße des in die Vorrichtung zur thermischen Behandlung eingeführten Materials 1 bis 5 mm im Durchmesser beträgt und die mehrstufige thermische Behandlung drei Stufen umfaßt, wobei die Temperatur in
   i) einer ersten Stufe 60 bis 130 °C beträgt,
   ii) einer zweiten Stufe 130 bis 180 °C beträgt, und
   iii) einer dritten Stufe 160 bis 380 °C beträgt,
   und
c) das thermisch behandelte Gemisch über eine Düse zur Weiterbehandlung oder Formgebung ausgestoßen wird.

Bevorzugte Ausführungsformen sind Gegenstand der Unteransprüche.

Bei Anwendung des erfindungsgemäßen Verfahrens ist es überraschenderweise möglich, Abfall und Müll zu verarbeiten, der mehrere verschiedene und auch erheblich verschiedene Kunststoffarten und -typen enthält. Die dabei hergestellten Kunststoffmassen können ferner unerwarteterweise zu hochwertigen Produkten verarbeitet werden, wobei die Qualität und die sich daraus ergebende Nutzungsdauer bei Verwendung recylter Kunststoffe im Vergleich zur Verwendung neuhergestellter Kunststoffe statt bisher bei ca. 30 bis 35 % nunmehr überraschenderweise auf ca. 80 % und mehr gesteigert werden kann.

Dieses Recycling- bzw. Herstellungsverfahren ermöglicht es insbesondere, daß Kunststoffe und Kunststoffsorten aller Kunststoffarten (Thermoplaste, Duroplaste, Elastomere und andere), von denen einige nach heutigem Kenntnisstand als nicht wiederverwertbar, wiedereinschmelzbar, gemischt nicht miteinander verträglich und nicht homogen mischbar gelten, durch thermischmechanische Behandlung während des Verarbeitungsprozesses und durch die Verwendung einer beigemischten Zusatzkomponente eine homogene oder teilhomogene Masse bilden.

Die bisher bei den bekannten Verfahren aufgetretenen Unverträglichkeiten zwischen den verschiedenen Kunststoffen (z.B. PVC in jeder beliebigen Kombination, PS/PE, PE/PP, PA/PE) und die Zersetzung bzw. das Verbrennen der erhaltenen Kunststoffmassen beim Erhitzen werden durch das erfindungsgemäße Verfahren überwunden. Besonders erwähnenswert ist, daß die diversen Kunststoffe unsortiert (nicht sortenrein), d.h. gemeinsam, verarbeitet werden können.

Darüber hinaus können viele weitere Altstoffe wie beispielsweise Gummi, Teppichböden und Fußbodenbeläge, Holzabfälle, Glasfaserabfälle, Altpapier usw. dem Verfahren als zusätzlicher Bestandteil zum Material beliebiger oder unbekannter Zusammensetzung X zugesetzt werden und damit entsorgt werden, ohne daß die Effektivität des Verfahrens dadurch nachteilig beeinträchtigt wird. Es wird daher insgesamt ein wichtiger Beitrag zur Vermeidung von auf Deponien abzulagerndem und in Müllverbrennungsanlagen zu verbrennendem Müll geleistet.

So können bei dem erfindungsgemäßen Verfahren ungereinigte kunststoffe bis zu einem gewissen Verschnutzungsgrad und kunststoffremde Stoffe bis zu einem bestimmten Mengenanteil des Gesamtvolumens verarbeitet, hinzugefügt und in die entstehenden Kunststoffgemische bzw. Gemische aus Kunststoff und kunststoffremden Stoffen gebunden werden, wobei dieses Gemisch zusammen mit der Zusatzkomponente natürlichen biologischen oder synthetischen Ursprungs je nach dem jeweiligen Mengenanteil und der Art der vorhandenen Stoffe eine homogene oder eingeschränkt, d.h. teilhomogene, Verbindung eingehen.

Bei der Auswahl des bei dem erfindungsgemäßen Verfahren eingesetzten Materials ist lediglich das Erfordernis zu erfüllen, daß das der Temperaturbehandlung zu unterziehende Materialgemisch aus A und X zusammen bezogen auf das Volumen zusammen mindestens eine solche Menge Kunststoff enthalten, daß die kunststoffremden Komponenten darin noch unter Bildung einer homogenen oder teilhomogenen Masse eingebunden werden, wobei der Kunststoffgehalt darin vorzugsweise mindestens 10, bevorzugter 25, insbesondere 40 und am meisten bevorzugt mindestens 50 Vol.% Kunststoff enthält, wobei dieser Anteil erfindungsgemäß wiederum aus verschiedenen Kunststoffraktionen zusammengesetzt sein können.

Das Trägermaterial A umfaßt vorzugsweise eine Komponente, die Kunststoff ausgewählt aus thermoplastischen, duroplastischen und/oder elastomeren Kunststoffen enthält, wobei auch Verbundwerkstoffe und RIM-Kunststoffe umfaßt sind, die derartige Kunststoffe enthalten.

Gemäß bevorzugten Ausführungsformen der Erfindung umfaßt das Kunststoffmaterial einen oder mehrere Kunststoffe ausgewählt aus Acrylnitril/Butadien/Styrol-Polymeren (ABS), Polyethylenen (PE) einschließlich Polyethylen (PE) hoher, mittlerer und niederer Dichte, Polycarbonaten (PC), Polytetrafluorethylenen (PTFE), Polyethylenterephthalaten (PET), Ethylen/Vinylacetat-Polymeren (EVA), Polymethylenen (PMMA), Polyexymethylenen (PEM), Styrol/Acryl-nitril-Polymeren (SAN), Polystyrolen (PS, EPS, ASA), Polyamiden (PA), Polypropylenen (PP), Polyvinylchloriden (PVC) und Polyurethanen (PUR) und insbesondere Polyethylen (PE) und/oder Polypropylen (PP).

Das Kunststoff enthaltende Trägermaterial A kann beispielsweise Teppichreste und/oder Stoffreste umfassen, die ganz oder teilweise aus Kunststoff bestehen.

Neben der Kunststoff umfassenden Komponente kann das Trägermaterial A, bezogen auf das Volumen, bis zu 10% und insbesondere bis zu 5% anderes Material als Verunreinigung enthalten. Dann ist allerdings bei der Bildung der erfindungsgemäßen einer mehrstufigen thermischen Behandlung zu unterziehenden Mischung darauf zu achten, daß das Material X seinerseits so viel Kunststoff enthält, daß insgesamt die erforderliche Menge, am meisten bevorzugt mindestens 50 Vol.% Kunststoff vorliegen. Das andere Material kann beispielsweise ausgewählt sein aus Gummi- und Kautschukwerkstoffen, Fußbodenbelägen aller Art, Glas und Glasfasern, Metall, Papier, Holz und Holzresten, insbesondere Sägemehl, Wolle und Sand.

Gemäß bevorzugten Ausführungsformen wird das Trägermaterial A vorsortiert und wird der Anteil an Kunststoff enthaltender Komponente in dem Trägermaterial A auf diese Weise, bezogen auf das Volumen, auf 90 bis 100% eingestellt.

Bei einem Kunststoffgehalt des Trägermaterials A von 100% braucht in bezug auf das Material X, wenn bereits 50 Vol.% an Trägermaterial A eingesetzt werden, nicht auf dessen Zusammensetzung geachtet werden, d.h. auf einen bestimmten Kunststoffgehalt desselben. Die bei der Vorsortierung abgetrennte Fraktion kann und wird vorzugsweise wiederum als Material beliebiger oder unbekannter Zusammensetzung X eingesetzt werden, so daß sich eine 100%ige Ausnutzung des Kunststoffmülls ergibt.

Das Trägermaterial A und das Material Zusammensetzung X werden, bezogen auf das Volumen, in einem Verhältnis von 1:50 bis 50:1, bevorzugt 1:10 bis 10:1 und insbesondere 1:5 bis 5:1 miteinander gemischt, wobei auf die Einhaltung der Anwesenheit eines Kunststoffmindestan teils des Gemisches von 50 Vol.% geachtet werden muß. Vorzugsweise werden die Materialien A und X im Verhältnis von 50:50 miteinander gemischt, wobei das Trägermaterial A dann vorzugsweise außer Kunststoff kein anderes Material umfaßt. Sollte es jedoch anderes Material enthalten, ist der Anteil des Trägermaterials A an der Gesamtmischung zu erhöhen, oder es muß auf die Anwesenheit einer Kunststoffraktion in dem Material beliebiger oder unbekannter Zusammensetzung geachtet werden.

Das Material X kann Kunststoff enthaltendes Abfallmaterial, das von der Kunststoff enthaltenden Komponente des Trägermaterials A verschieden ist, Hausmüll, Sperrmüll, Papier und Pappe, insbesondere Altpapier, beschichtete Pappe und beschichtetes Altpapier, Deponiemüll, Metall, Holz und Holzreste, insbesondere Sägemehl, Gummimaterialien und Glasfaser sein.

Das Trägermaterial A und das Material Zusammensetzung X werden vor dem Vermischen gegebenenfalls zerkleinert, z.B. geschreddert, geschnitten und/oder feingemahlen, um so ein innigeres und gründlicheres Vermischen der beiden Komponenten vor der thermischen Behandlung zu erleichtern und zu gewährleisten. Die Materialien A und X können vor dem Vermischen jeweils getrennt bevorratet werden, beispielsweise in Vorratsbehältern wie einem Vorratssilo, und können vor Ort, d.h. vor Einführung in die Vorrichtung zur thermischen Behandlung, gemischt werden. Alternativ kann eine Vormischung vorbereitet und bevorratet werden, die dann der Vorrichtung zur thermischen Behandlung zugeführt wird. Die Materialien können beispielsweise durch Verwendung bekannter Sortiermaschinen vorbereitet und bereitgestellt werden.

Dem Gemisch aus Trägermaterial A und Material X wird vorzugsweise vor der mechnischen/thennischen Behandlung die Zusatzkomponente Z zugesetzt, die ausgewählt ist aus Fettsäure(n), Fettsäure enthaltenden Gemischen, unter den Verfahrensbedingungen Fettsäure freisetzenden Fettsäurederivaten und Fettalkoholen.

Der Ausdruck "Fettsäure" ist so zu verstehen, daß er beliebige aliphatische Carbonsäuren umfaßt, vorzugsweise die aliphatischen C₁- bis C₅₀-Carbonsäuren, die unverzweigt, verzweigt, gesättigt oder ungesättigt sein können (Alkan- Alken- und Alkincarbonsäuren). Umfaßt sind ferner beliebige Mischungen solcher Fettsäuren. Beispiele für die unverzweigten gesättigten Alkancarbonsäuren sind Ameisensäure, Essigsäure, Propionsäure, Buttersäure, Valeriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Behensäure, Lignocerinsäure und Melissinsäure. Beispiele für die verzweigten gesättigten Alkancarbonsäuren sind Isobuttersäure, Isovaleriansäure und Tubercolostearinsäure. Beispiele für die unverzweigten einfach ungesättigten Alkencarbonsäuren sind Crotonsäure, Palmitoleinsäure, Ölsäure und Erucasäure. Beispiele für die unverzweigten zweifach ungesättigten Alkencarbonsäuren sind Sorbinsäure und Linolsäure. Beispiele für die unverzweigten dreifach ungesättigten Alkencarbonsäuren sind Linolensäure und Elaeostearinsäure. Ein Beispiel für die unverzweigten vierfach ungesättigten Alkencarbonsäuren ist Arachidonsäure. Ein Beispiel für die unverzweigten fünffach ungesättigten Alkencarbonsäuren ist Clupanodonsäure. Ein Beispiel für die unverzweigten sechsfach ungesättigten Alkencarbonsäuren ist Docoshexaensäure. Sie können beispielsweise aus Gärungsprodukten, Hefen, Tier- und Pflanzenfetten oder daraus gewonnenen Produkten wie Milchfett, Butter, Kokosöl, Kalmusöl, Palmöl, Erdnußöl, Rüböl, Kakaoöl, Carnaubawachs, Bienenwachs, Lanolin, Sojaöl, Maisöl, Crotonöl, Traubenkernöl, Ebereschenöl, Rindertalg und Fischöl. Die entsprechenden Fettsäurederivate und Fettalkohole sind erfindungsgemäß ebenfalls umfaßt.

Es kann sich daher bei den Fettsäuren und Fettalkoholen um gesättigte, einfach- oder mehrfach ungesättigte Verbindungen handeln, die aus Ölpflanzen und sonstigen pflanzlichen Produkten, tierischen Produkten gewonnen bzw. hergestellt werden können.

Die Zusatzkomponente ist vorzugsweise ungesättigt und je höher der Grad an Ungesättigtheit der Fettsäure ist, desto bevorzugter ist sie.

Beispielsweise sind Leinöl und/oder Maisöl als Zusatzkomponente Z geeignet und bevorzugt.

Bei Zugabe dieser Zusatzkomponente ergibt sich überraschenderweise eine verbesserte Temperaturbeständigkeit der Mischung während der thermischen Behandlung, die beträchtlich über die Temperaturbeständigkeit hinausgeht, die ohne die Zusatzkomponente erreicht wird. Das Zusatzkomponente wirkt dabei auch als Verträglickeitsvermittler und Bindemittel. Sie wird, bezogen auf das Volumen der Mischung aus A und X, in einer Menge von 0,01 bis 10 %, insbesondere 0,1 bis 5 % und bevorzugt 0,3 bis 3 % zugesetzt. Größere Mengen sind möglich aber in der Regel unnötig.

Genau wie bei herkömmlichen Verfahren können erfindungsgemäß ebenfalls problemlos Prozeß- und Funktionsadditive verwendet werden, um so den verschiedenen Eigenschaftsanforderungen (auch der Produkte) gerecht zu werden.

Durch die thermische und mechanische Behandlung der erfindungsgemäßen Gemische während des Verarbeitungsprozesses wird möglicherweise durch das Zusammenwirken mit der Zusatzkomponente bei den im Gemisch vorhandenen Kunststoffen eine chemische und/oder physikalische Reaktion herbeigeführt, durch die die verschiedenen Kunststoffe homogen oder zumindest teilhomogen miteinander verbunden werden. Die Stoffe, die bei diesem Vorgang keine homogene oder teilhomogene Verbindung eingehen, werden durch mechanisches Einwirken während des Verarbeitungsprozesses in ihrer Form und Größe so verändert, daß sie im entstehenden Kunststoffwerkstoff vollständig oder zu mindest zu einem größeren Teil gebunden werden.

Das Mischen des Trägermaterials A, des Materials beliebiger oder unbekannter Zusammensetzung X und der Zusatzkomponente Z miteinander erfolgt beispielsweise in einem Mischer bzw. einer Mischanlage.

Die mehrstufige thermische Behandlung des so erhaltenen Gemisches umfaßt dungsgemäßen Verfahrens drei Stufen, wobei die Temperatur in
i) der ersten Stufe 60 bis 130 °C, insbesondere 80 bis 120 °C und vorzugsweise 90 bis 120 °C, z.B. 100 °C beträgt,
ii) der zweiten Stufe 130 bis 180 °C, insbesondere 140 bis 170 °C und vorzugsweise 140 bis 160 °C beträgt, und
iii) der dritten Stufe 160 bis 380 °C, insbesondere 170 bis 320 °C und vorzugsweise 180 bis 280 °C beträgt.

Es können beispielsweise auch mehr Stufen vorgesehen werden. Geeignet sind daher auch 5 bis 12 Stufen.

Die mehrstufige thermische Behandlung erfolgt beispielsweise in einer bekannten Spritzmaschine oder einem Extruder (siehe A. Jungbauer, Recycling von Kunststoffen, 1. Auflage, Würzburg, Vogel-Verlag, 1994, insbesoondere S. 40 ff), wobei das Materialgemisch unter fortgesetztem mechanischen Vermischen, Kneten oder Zusammenpressen entlang eines Weges, z.B. eines Schneckenweges, vorantransportiert wird. Der Transportweg ist in Abschnitte eingeteilt, die sich in ihrer Temperatur unterscheiden. Im folgenden sind einige Beispiele angegeben, die eine geeignete Temperaturführung veranschaulichen. Sie kann jedoch in Abhängigkeit vom verwendeten Material innerhalb der oben angegebenen Bereiche variiert werden.

### Beispiele 1 bis 8

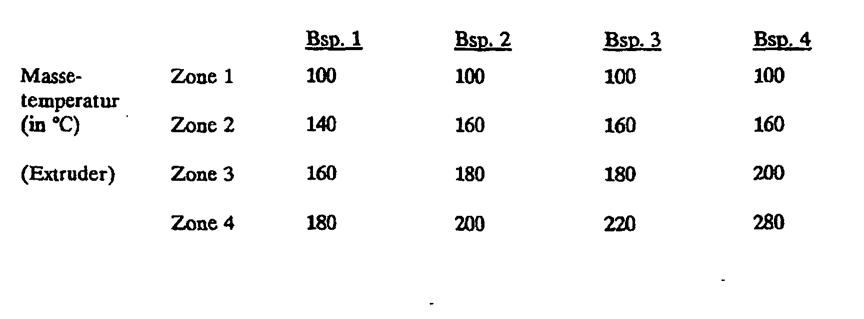

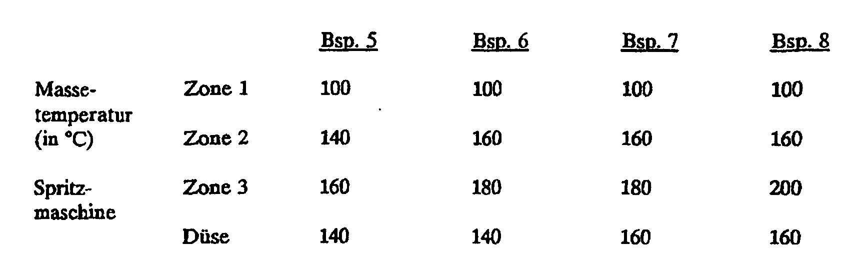

Die Korngröße des in die jeweilige Vorrichtung zur thermischen Behandlung eingeführten Materials beträgt vorzugsweise 0,1 bis 5 mm, insbesondere 0,5 bis 5 und bevorzugter 1 bis 5 mm im Durchmesser. Die Wahl der jeweiligen Zonentemperatur hängt beispielsweise von der Korngröße und der Zusammensetzung des eingesetzten Materialgemisches ab und kann innerhalb der vorgegebenen Bereiche an das jeweils zu verarbeitende Materialgemisch angepaßt werden.

Das die thermische Behandlung erfolgt vorzugsweise in einer Spritzmaschine oder einem Extruder.

Das Material, das beispielsweise aus der Düse einer Spritzmaschine oder eines Extruders ausgestoßen wird, nachdem es darin thermisch behandelt worden ist, kann unmittelbar im Anschluß geformt und abkühlengelassen werden. Alternativ kann die Formgebung erst später erfolgen, wobei die Kunststoffmasse dann, falls erforderlich, zunächst wieder soweit erwärmt wird, daß sie in die gewünschte Form gebracht werden kann.

Eine zur Durchführung des erfindungsgemäßen Verfahrens geeignete Vorrichtung ist beispielsweise eine Spritzgießmaschine der Firma Storck, z.B. Modell ST 1600-330, eine Spritzgußmaschine der Firma Battenfeld, Modell BC-T und eine Spritzgießmaschine der Firma Dr.-Ing. Sommer, Modell DS Variant 16-2033.

Es sind aber auch beliebige andere entsprechende Vorrichtungen geeignet, solange sie die erfindungsgemäß erforderliche mechanische/thermische Behandlung ermöglichen.

Das nach der thermischen Behandlung ausgestoßene Material kann gepreßt, gespritzt, geschäumt oder extrudiert werden, wobei es jede gewünschte Form annehmen kann. Beispielsweise können formstabile oder flexible Produkte wie Platten, Folien, Stäbe, Pfosten, Balken, Rohre, Schläuche, Verschalungs-, Auskleidungsoder Isolationselemente, Ummantelungen, Sicht- und Thermoschutzelemente sowie Elemente zum Schutz vor mechanischer Beschädigung, Formteile zur Hohlraumausfüllung, Kunstruktionselemente, Ziegel, Stützelemente, Dachpfannen, Werkzeugteile oder Verbindungselemente, Pflastersteine oder ähnliches gebildet werden. Diese Aufzählung ist nicht als einschränkend anzusehen.

Die mit dem erfindungsgemäß hergestellten Kunststoffmaterial hergestellten Produkte sind qualitativ hochwertige Produkte, wobei die Herstellungskosten gegenüber vergleichbaren Produkten aus neu/erstmals hergestellten Kunststoffen oder aus sortenreinen Kunststoffen (nach einem Recycling davon) als jeweils alleinigem Material hergestellten Produkte erheblich preiswerter sind. Eine Preisersparnis von beispielsweise bis zu 50%, in Einzelfällen sogar mehr ist möglich.

Im folgenden sind die Eigenschaften eines erfindungsgemäß hergestellten Industriebodenbelages angegeben, der aus Kabelabfällen, Weich-PVC, PE und 5% Gummigranulat hergestellt worden ist. Die Daten zeigen, daß das Material die an ein solches Produkt gestellten Anforderungen erfüllt.

| | | |
|---|---|---|
| 1. | Flächengewicht nach DIN 53352 | 14,35 kg/m² |
| 2. | Dichte nach DIN 53479 | 1,49 g/cm³ |
| 3. | Zugfestigkeit nach DIN 53455 | 8,75 N/mm² |
| 4. | Reißdehnung nach DIN 53455 | 70% |
| 5. | Kerbschlagzähigkeit nach DIN 53453 | 17,73 J/cm² |
| 6. | Maßänderung durch Wärmeeinwirkung in Anlehnung an DIN 51962 Warmlagerung über 6 h bei 80°C gemessen bei 120°C über 6 Stunden | keine Formänderung max. 0,29% |
| 7. | Brennverhalten nach DIN 51960 | Klasse 1 (schwer ent zündlich) |
| 8. | Verhalten beim Beflammen mit dem Brenner nach DIN 53438 | Klasse F1/9,8mm |
| 9. | Gleitverhalten in Anlehnung an DIN 53375 | |
| | Schuhsohlenleder | µ = 0,53 |
| | Gummi-Schuhsohle | µ = 0,70 |
| | PUR/PVC-Schuhsohle | µ = 0,68 |
| 10. | Kugeldruckhärte nach DIN 53456 Bei Belastung mit der Hauptlast 49,03 N | |
| | nach 20 min. elastische Rückbildung | 41% |
| | nach 40 min. elastische Rückbildung | 48% |
| | Kugeldruckhärte Vollständige Rückblendung nach 4 Std. | 6,4 N/mm² |
| 11. | Rückprallelastizität bei 0,5 Nm Stoßenergie | 15% |
| 12. | Wärmeleitfähigkeit in Anlehnung an DIN 52612 Temperaturzunahme von 20 auf 40°C in | 20 min. |
| 13. | Chemisch-physikalische Einwirkung von Prüfmitteln nach DIN 51958 | |
| | Natronlauge 1% | beständig |
| | Natronlauge 10% | beständig |
| | Natronlauge 15% | beständig |
| | Salpetersäure 10% | beständig |
| | Salpetersäure 30% | bedingt beständig |
| | Salzsäure 10% | beständig |
| | Schwefelsäure 3% | beständig |
| | Schwefelsäure 30% | beständig |
| | Essigsäure 5% | bedingt beständig |
| | Mineralöl SAE20W/50 | beständig |

Das Material X kann ebenfalls ein Reinstoff sein oder verschiedene Kunststoffe oder kunststofffremde Komponenten in beliebigen oder annähernd gleichen Teilen enthalten.

Als Material X kommen allein oder in Form von beliebigen Mischungen derselben insbesondere in Frage, wobei es aber von dem Trägermaterial A verschieden bzw. durch zum Teil unbekannte Stoffe verunreinigt ist: PVC (Weich-PVC, Hart-PVC, z.B. Teppichreste), HDPE, LDPE, PP, PA (PA6, PA 6.6, Pa 11, PA 12, PA GV 30 H), PMMA, POM, PUR (z.B. Elastomere und Schaumstoffe), ABS, SAN, PS, PC, TPE (thermoplastische Polymere), PE/PA-Gemische, Faserteppichreste, Sägemehl, Lebensmittelverpackungen aus Kunststoff, kunststoffbeschichtetem Papier oder kunststoffbeschichteter Pappe, Tragetaschen aus Kunststoff (z.B. sog. Plastiktüten) und PPO (Polyphenyloxid).

Es sind 9 Musterplatten mit den Abmessungen 15 cm x 15 cm x 0,5 cm hergestellt worden, die als Trägermaterial A die in der folgenden Tabelle angegebenen Kunststoffe enthalten, eines oder mehrere der ebenfalls darin angegebenen Materialien beliebiger oder unbekannter Zusammensetzung X sowie 5 % Leinöl als Zusatzkomponente enthalten. Die Mengenangaben beziehen sich auf das Volumen der Gesamtmischung.

| | |
|---|---|
| Platte 1 | 10 % HDPE (Polyethylen hoher Dichte), 90 % Sägemehl |
| Platte 2 | 25 % HDPE, 75 % Sägemehl |
| Platte 3 | 50 % PP, 50 % einer Mischung M sämtlicher oben in Absatz 2 genannter Materialien (annähernd gleiche Anteile) |
| Platte 4 | 30 % HDPE + 20 % ABS, 50 % der Mischung M |
| Platte 5 | 50 % HDPE, 50 % der Mischung M |
| Platte 6 | 25 % PE + 25 % PA, 50 % der Mischung M |
| Platte 7 | 10 % HDPE + 20 % LDPE (Polyethylen niederer Dichte) + 20 % SAN, 50 % der Mischung M |
| Platte 8 | 25 % PP + 25 % ABS/SAN, 50 % der Mischung M |
| Platte 9 | 30 % PP + 20 % ABS/Pa, 50 % der Mischung M |

## Patentansprüche

1. Verfahren zum Recycling und Herstellen von Kunststoffen, Kunststoffgemischen und Kunststoffwerkstoffen unter Verwendung von neuen, aufgearbeiteten oder alten Kunststoffen und Kunststoffgemischen oder von sortierten und unsortierten Kunststoffabfällen **dadurch gekennzeichnet, daß**
a) ein Trägermaterial A, das ein einheitlichen sortenreinen Kunststoff oder verschiedenartige Kunststoffe umfassendes, neuhergestelltes Kunststoffmaterial oder Kunststoffabfallmaterial umfaßt und neben der Kunststoff umfassenden Komponente bezogen auf das Volumen bis zu 10 % an anderem Material als Verunreinigung enthält, ein Material X, das ausgewählt ist aus Kunststoff enthaltendem Abfallmaterial, das von der Kunststoff enthaltenden Komponente des Trägermaterials A verschiedenen ist, Hausmüll, Sperrmüll, Papier und Pappe, insbesondere Altpapier, kunststoffbeschichteter Pappe und kunststoffbeschichtetem Altpapier, Deponiemüll, Metall, Holz und Holzresten, Sägemehl, Gummimaterialien und Glasfasern, und eine Zusatzkomponente Z ausgewählt aus Fettsäuren, Fettsäure enthaltenden Gemischen natürlichen oder synthetischen Ursprungs, unter den Verfahrensbedingungen Fettsäure freisetzenden Fettsäurederivaten und Fettalkoholen, bezogen auf das Volumen der Mischung aus A und X in einer Menge von 0,01 bis 10 % miteinander gemischt werden, wobei das Volumenverhältnis von A zu X 1 : 50 bis 50 : 1 beträgt und die Mischung von A und X mindestens 50 Vol.% Kunststoff enthält, wodurch die kunststoffremden Komponenten darin noch unter Bildung einer homogenen oder teilhomogenen Masse eingebunden werden,
b) dieses Gemisch unter fortgesetztem mechanischem Vermischen, Kneten oder Zusammenpressen durch eine Fördervorrichtung transportiert und entlang des Transportweges einer abschnittsweise erfolgenden mehrstufigen thermischen Behandlung unterzogen wird, wobei die Korngröße des in die Vorrichtung zur thermischen Behandlung eingeführten Materials 1 bis 5 mm im Durchmesser beträgt und die mehrstufige thermische Behandlung drei Stufen umfaßt, wobei die Temperatur in
i) einer ersten Stufe 60 bis 130 °C beträgt,
ii) einer zweiten Stufe 130 bis 180 °C beträgt, und
iii) einer dritten Stufe 160 bis 380 °C beträgt,
und
c) das thermisch behandelte Gemisch über eine Düse zur Weiterbehandlung oder Formgebung ausgestoßen wird.

2. Verfahren nach Anspruch 1, **dadurch gekennzeichnet, daß** das Trägermaterial A eine Komponente umfaßt, die Kunststoff ausgewählt aus thermoplastischen Kunststoffen, duroplastischen und elestomeren Kunststoffen enthält, wobei auch solche Kunststoffe enthaltenden Verbundwerkstoffe und RIM-Kunststoffe umfaßt sind.

3. Verfahren nach Anspruch 1 oder 2, **dadurch gekennzeichnet, daß** der Kunststoff ausgewählt ist aus Acrylnitril/Butadien/Styrol-Polymeren (ABS), Polyethylenen (PE) einschließlich Polyethylen hoher, mittlerer und niederer Dichte, Polycarbonaten (PC), Polytetrafluorethylen (PTFE), Polyethylenterephthalaten (PET), Ethylen/Vinylacetat-Polymeren (EVA), Polymethylenen (PMMA), Polyoxymethylenen (PEM), Styrol/Acrylnitril-Polymeren (SAN), Polystyrolen (PS, EPS, ASA), Polyamiden (PA), Polypropylenen (PP), Polyvinylchloriden (PVC) und Polyurethanen (PUR).

4. Verfahren nach Anspruch 3, **dadurch gekennzeichnet, daß** der Kunststoff Polyethylen (PE) und/oder Polypropylen (PP) umfaßt.

5. Verfahren nach Anspruch 1, 2, 3 oder 4, **dadurch gekennzeichnet, daß** das Trägermaterial A Teppichreste und/oder Stoffreste umfaßt.

6. Verfahren nach einem der vorhergehenden Ansprüche, **dadurch gekennzeichnet, daß** das Trägermaterial A neben der Kunststoff umfassenden Komponente bezogen auf das Volumen bis zu 5 % an anderem Material als Verunreinigung enthält.

7. Verfahren nach einem der vorhergehenden Ansprüche, **dadurch gekennzeichnet, daß** das das andere Material ausgewählt ist aus Gummi, Fußbodenbelägen, Glas und Glasfasern, Papier, Holz und Holz-resten, Sägemehl, Wolle und Sand.

8. Verfahren nach einem der vorhergehenden Ansprüche, **dadurch gekennzeichnet, daß** das Trägermaterial A vorsortiert wird und der Anteil an Kunststoff enthaltender Komponente in dem Trägermaterial A auf diese Weise bezogen auf das Volumen auf 90 bis 100 % eingestellt wird.

9. Verfahren nach Anspruch 8, **dadurch gekennzeichnet, daß** die aussortierte Fraktion als Material X eingesetzt wird.

10. Verfahren nach einem der vorhergehenden Ansprüche, **dadurch gekennzeichnet, daß** das Trägermaterial A und das Material X vor dem Vermischen zerkleinert werden.

11. Verfahren nach einem der vorhergehenden Ansprüche, **dadurch gekennzeichnet, daß** das Trägermaterial A und das Material X gegebenenfalls nach einer Vorsortierung, nach der Zerkleinerung und vor dem Vermischen bevorratet werden.

12. Verfahren nach einem der vorhergehenden Ansprüche, **dadurch gekennzeichnet, daß** das Trägermaterial A und das Material X bezogen auf das Volumen im Verhältnis von 50:50 miteinander gemischt werden.

13. Verfahren nach Anspruch 12, dadurch gekeimzeichnet, daß das Tragermaterial A außer der Kunststoff enthaltenden Komponente kein anderes Material umfaßt.

14. Verfahren nach einem der vorhergehenden Ansprüche, **dadurch gekennzeichnet, daß** die mehrstufige thermische Behandlung drei Stufen umfaßt, wobei die Temperatur in
i) der ersten Stufe 80 bis 120 °C beträgt,
ii) der zweiten Stufe 140 bis 170 °C beträgt, und
iii) der dritten Stufe 170 bis 320 °C beträgt.

15. Verfahren nach einem der vorhergehenden Ansprüche, **dadurch gekennzeichnet, daß** die mehrstufige thermische Behandlungdrei Stufen umfaßt, wobei die Temperatur in
i) der ersten Stufe 90 bis 120 °C beträgt,
ii) der zweiten Stufe 140 bis 160 °C beträgt, und
iii) der dritten Stufe 180 bis 280 °C beträgt.

16. Verfahren nach einem der vorhergehenden Ansprüche, **dadurch gekennzeichnet, daß** das Mischen des Kunststoffabfall enthaltenden Trägermaterials A, des Materials X und der Zusatzkomponente Z miteinander in einem Mischer oder einer Mischanlage gemischt werden und/oder der Transport und die Temperaturbehandlung in einer Spritzmaschine oder einem Extruder erfolgt.

17. Verfahren nach einem der vorhergehenden Ansprüche, **dadurch gekennzeichnet, daß** die Zusatzkomponente bezogen auf das Volumen der Mischung aus A und X in einer Menge von 0,1 bis 5 % zugesetzt wird.

18. Verfahren nach Anspruch 17, **dadurch gekennzeichnet, daß** die Zusatzkomponente bezogen auf das Volumen der Mischung aus A und X in einer Menge von 0,3 bis 3 % zugesetzt wird.

19. Verfahren nach einem der vorhergehenden Ansprüche, **dadurch gekennzeichnet, daß** die Zusatzkomponente Leinöl und/oder Maisöl umfaßt.

20. Verfahren nach einem der vorhergehenden Ansprüche, **dadurch gekennzeichnet, daß** das Mischen und die thermische Behandlung in einer Spritzmaschine oder einem Extruder erfolgen.

21. Verfahren nach einem der vorhergehenden Ansprüche, **dadurch gekennzeichnet, daß** das aus der Düse ausgestoßene thermisch behandelte Gemisch geformt und abkühlen gelassen wird.

22. Verfahren nach Anspruch 21, **dadurch gekennzeichnet, daß** aus dem aus der Düse ausgestoßene thermisch behandelte Gemisch formstabile oder flexible Platten, Folien, Stäbe, Pfosten, Balken, Rohre, Schläuche, Verschalungs-, Auskleidungs- oder Isolationselemente, Ummantelungen, Sicht- und Thermoschutzelemente sowie Elemente zum Schutz vor mechanischer Beschädigung, Formteile zur Hohlraumausfüllung, Konstruktionselemente, Ziegel, Stützelemente, Dachpfannen, Pflastersteine, Rasensteine, Werkzeugteile oder Verbindungselemente gebildet werden.

23. Verwendung von Fettsäuren, Fettsäure enthaltenden Gemischen, unter den Verfahrensbedingungen Fettsäure freisetzenden Fettsäurederivaten und Fettalkoholen, insbesondere Leinöl und/oder Maisöl, als Zusatzkomponente für ein Kunststoff enthaltendes Gemisch bei der Ver-/Aufarbeitung und Verwertung desselben in einem Verfahren gemäß einem der Ansprüche 1 bis 22.

## Claims

1. Process for recycling and production of plastics, mixtures of plastics and plastic materials by the use of new, reprocessed or used plastics and mixtures of plastics or of sorted and unsorted plastic waste, **characterised in that**
a) a carrier material A, comprising a uniform sorted plastic or various types of plastics that include a virgin plastic or a plastic waste material and which in addition to the plastic-containing components contains up to 10% by volume of other materials as an impurity, a material X chosen from plastic-containing waste material, which is different from the plastic-containing components of the carrier material A, domestic waste, bulky refuse, paper and cardboard, particularly waste paper, waste plastic coated cardboard and plastic coated paper, landfill waste, metal, wood and wood residues, sawdust, rubber materials and glass fibres, and an additive component Z chosen from fatty acids, mixtures containing fatty acids of natural or synthetic origin, derivatives of fatty acids that can release fatty acids under the process conditions and fatty alcohols mixed in the proportion 0.01 to 10% by volume to the mixture of A and X, wherein the volume ratio of A to X is 1:50 to 50:1 and the mixture of A and X comprises at least 50 vol.% of plastic such that the non plastic components are incorporated during the formation of a homogenous or partially homogenous compound,
b) this mixture is conveyed through a conveying device with continuous mechanical mixing, kneading or compression, and is subjected along the transport path to a sequential, step-wise, multi-step thermal treatment, whereby the particle size of the material subjected to the thermal treatment device is from 1 to 5mm in diameter and the multi-step thermal treatment comprises three steps wherein the temperatures in
i) a first step lie between 60 and 130°C,
ii) a second step lie between 130 and 180°C
iii) a third step lie between 160 and 380°C
and
c) the thermally treated mixture is discharged through a die for further treatment or for shaping.

2. Process according to Claim 1, **characterised in that** the carrier material A comprises a component which contains a plastic selected from thermoplastics, thermosets and elastomers, whereby also composites that contain such plastics and RIM-plastics are included.

3. Process according to Claim 1 or 2, **characterised in that** the plastic is selected from acrylonitrile butadiene styrene polymers (ABS), polyethylenes (PE) including high, medium and low density polyethylenes, polycarbonates (PC), polytetrafluoroethylene (PTFE), polyethylene terephthalates (PET), ethylene vinyl acetate copolymers (EVA), polymethylenes (PMMA), polyoxymethylenes (PEM), styrene acrylonitrile polymers (SAN), polystyrenes (PS, EPS, ASA), polyamides (PA), polypropylenes (PP), polyvinyl chlorides (PVC) and polyurethanes (PUR).

4. Process according to Claim 3, **characterised in that** the plastic comprises polyethylene (PE) and/or polypropylene (PP),

5. Process according to Claim 1, 2, 3 or 4, **characterised in that** the carrier material A comprises carpet remnants and/or textile remnants.

6. Process according to one of the preceding Claims, **characterised in that** the carrier material A comprises, in addition to the plastic-containing component, up to 5% by volume of another material as an impurixy.

7. Process according to one of the preceding Claims, **characterised in that** the other material is selected from rubber, floor coverings, glass and glass fibres, paper, wood and wood residues, sawdust, wool and sand.

8. Process according to one of the preceding Claims, **characterised in that** the carrier material A is pre-sorted such that the proportion by volume of plastic-containing component in the carrier material A is adjusted between 90 and 100%.

9. Process according to Claim 8, **characterised in that** the sorted fraction is used as material X.

10. Process according to one of the preceding Claims, **characterised in that** the carrier material A and the material X are comminuted prior to blending.

11. Process according to one of the preceding Claims, **characterised in that** the carrier material A and the material X are stored optionally after presorting, after comminution and before blending.

12. Process according to one of the preceding Claims, **characterised in that** the carrier material A and the material X are mixed with each other in the ratio of 50:50 by volume.

13. Process according to Claim 12, **characterised in that** the carrier material A comprises no other material apart from the plastic-containing component.

14. Process according to one of the preceding Claims, **characterised in that** the multi-step thermal treatment comprises three steps, whereby the temperature in
i) the first step lies between 90 and 120°C
ii) the second step lies between 140 and 170°C, and
iii) the third step lies between 170 and 320°C.

15. Process according to one of the preceding Claims, **characterised in that** the multi-step thermal treatment comprises three steps, whereby the temperature in
i) the first step lies between 90 and 120°C
ii) the second step lies between 140 and 160°C, and
iii) the third step lies between 180 and 280°C.

16. Process according to one of the preceding Claims, **characterised in that** the mixing together of the waste plastic-containing carrier material A, the material X and the additional component Z takes place in a mixer or mixing unit and/or the conveying and the thermal treatment take place in an injection machine or an extruder.

17. Process according to one of the preceding Claims, **characterised in that** the additional component Z is added, relative to the volume of the mixture of A and X, in a quantity of 0.1 to 5%.

18. Process according to claim 17, charactocised in that the additional component Z is added, relative to the volume of the mixture A and X, in a quantity of 0.3 to 3%.

19. Process according to one of the preceding Claims, **characterised in that** the additional component Z comprises linseed oil and/or maize oil.

20. Process according to one of the preceding Claims, **characterised in that** the mixing and the thermal treatment take place in an injection machine or an extruder.

21. Process according to one of the preceding Claims, **characterised in that** the thermally treated blend discharged from the die is shaped and left to cool.

22. Process according to claim 21, **characterised in that** the thermally treated blend discharged from the die is shaped into dimensionally stable or flexible sheets, films, rods, posts, beams, pipes, hoses, planks, siding or insulating elements, casings, visual and thermal protection elements and elements for protection against mechanical damage, pre-shaped parts for cavity filling, construction elements, bricks, supporting elements, roofing tiles, paving stones, garden slabs, tool parts or connecting elements.

23. Use of fatty acids, mixtures containing fatty acids, derivatives of fatty acids that can release fatty acids under the process conditions and fatty alcohols, particularly linseed oil and/or maize oil as additive components for a plastic-containing blend during processing or preparation and utilisation of said blends in a process according to one of Claims 1 to 22.

## Revendications

1. Procédé de recyclage et de fabrication de matières plastiques, mélanges de matières plastiques et matériaux à base de matières plastiques en utilisant des matières plastiques et des mélanges de matières plastiques neuves, traitées ou usées ou des déchets de matières plastiques triés ou non triés, **caractérisé en ce que**
a) on mélange ensemble un matériau de base A, qui comprend une matière plastique venant d'être fabriquée ou des déchets de matière plastique, contenant une matière plastique homogène de même type ou des matières plastiques de types différents, et qui contient, outre le composant comprenant la matière plastique, jusqu'à 10 % en volume d'une autre matière à titre d'impureté, un matériau X qui est choisi parmi les déchets contenant la matière plastique, différents du composant contenant la matière plastique du matériau de base A, des déchets ménagers, déchets encombrants, du papier et du carton, notamment des vieux papiers, du carton revêtu de matière plastique et des vieux papiers revêtus de matière plastique, des déchets de décharge, du métal, du bois et des chutes de bois, de la sciure de bois, des matières de caoutchouc et fibres de verre, et un composant de charge Z choisi entre les acides gras, les mélanges contenant des acides gras d'origine naturelle ou synthétique, les dérivés d'acides gras et alcools gras libérant des acides gras dans les conditions du procédé, présents en une quantité de 0,01 à 10 % en volume du mélange de A et X, le rapport en volume entre A et X étant de 1/50 à 50/1, et le mélange de A et X contenant au moins 50 % en volume de matière plastique, moyennant quoi les composants étrangers au plastique y sont incorporés en formant une masse homogène ou partiellement homogène,
b) ce mélange est transporté en faisant l'objet d'un mélange mécanique, d'un malaxage ou d'une compression successive par l'intermédiaire d'un dispositif de transport et est soumis, le long de la voie de transport, à un traitement thermique par tronçons comprenant plusieurs étapes : la granulométrie de la matière introduite dans le dispositif de traitement thermique est comprise entre 1 et 5 mm et le traitement thermique en plusieurs étapes comprend trois étapes, la température étant:
i) comprise entre 60 et 130 °C dans une première étape,
ii) comprise entre 130 et 180 °C dans une deuxième étape, et
iii) comprise entre 160 et 380 °C dans une troisième étape, et
c) le mélange traité par voie thermique est évacué par l'intermédiaire d'une buse pour faire l'objet d'un traitement ultérieur ou d'un formage.

2. Procédé selon la revendication 1, **caractérisé en ce que** le matériau de base A contient un composant qui comprend une matière plastique choisie parmi les matières plastiques thermoplastiques, thermodurcissables et élastomères, les matières plastiques composites et les matières plastiques résultant du moulage par injection contenant ces matières plastiques étant également englobées.

3. Procédé selon la revendication 1 ou 2, **caractérisé en ce que** la matière plastique est choisie parmi les polymères acrylnitrile / butadiène / styrène (ABS), les polyéthylènes (PE), y compris le polyéthylène à densité élevée, moyenne ou faible, les polycarbonates (PC), le polytétrafluoroéthylène (PTFE), polyéthylène téréphtalates (PET), les polymères éthylène / acétate de vinyle (EVA), les polyméthylènes (PMMA), polyoxyméthylènes (PEM), les polymères styrène /acrylnitrile (SAN), le polystyrène (PS, EPS, ASA), polyamides (PA), polypropylènes (PP), polychlorures de vinyle (PVC) et polyuréthannes (PUR).

4. Procédé selon la revendication 3, **caractérisé en ce que** la matière plastique contient du polyéthylène (PE) et / ou du polypropylène (PP).

5. Procédé selon la revendication 1, 2, 3 ou 4, **caractérisé en ce que** le matériau de base A comprend des chutes de tapis et / ou des coupons de tissus.

6. Procédé selon l'une quelconque des revendications précédentes, **caractérisé en ce que** le matériau de base A contient, outre le composant comprenant la matière plastique, jusqu'à 5 % en volume d'une autre matière à titre d'impureté.

7. Procédé selon l'une quelconque des revendications précédentes, **caractérisé en ce que** l'autre matière est choisie parmi le caoutchouc, les revêtements de sol, le verre et les fibres de verre, le papier, le bois et les chutes de bois, la sciure de bois, la laine et le sable.

8. Procédé selon l'une quelconque des revendications précédentes, **caractérisé en ce que** le matériau de base A est pré-trié et que la teneur en composant contenant la matière plastique dans le matériau de base A est fixée de cette manière à une valeur comprise entre 90 et 100 % en volume.

9. Procédé selon la revendication 8, **caractérisé en ce que** la fraction extraite est mise en oeuvre en tant que matériau X.

10. Procédé selon l'une quelconque des revendications précédentes, **caractérisé en ce que** le matériau de base A et le matériau X sont broyés avant le mélange.

11. Procédé selon l'une quelconque des revendications précédentes, **caractérisé en ce que** le matériau de base A et le matériau X peuvent être, le cas échéant, stockés après le tri préalable, après le broyage et avant le mélange.

12. Procédé selon l'une quelconque des revendications précédentes, **caractérisé en ce que** le matériau de base A et le matériau X sont mélangés selon un rapport en volume de 50/50.

13. Procédé selon la revendication 12, **caractérisé en ce que** le matériau de base A ne contient pas d'autre matériau en dehors du composant contenant la matière plastique.

14. Procédé selon l'une quelconque des revendications précédentes, **caractérisé en ce que** le traitement thermique en plusieurs étapes comprend trois étapes, la température étant :
i) comprise entre 80 et 120 °C dans une première étape,
ii) comprise entre 140 et 170 °C dans une deuxième étape, et
iii) comprise entre 170 et 320 °C dans une troisième étape.

15. Procédé selon l'une quelconque des revendications précédentes, **caractérisé en ce que** le traitement thermique en plusieurs étapes comprend trois étapes, la température étant :
i) comprise entre 90 et 120 °C dans une première étape,
ii) comprise entre 140 et 160 °C dans une deuxième étape, et
iii) comprise entre 180 et 280 °C dans une troisième étape.

16. Procédé selon l'une quelconque des revendications précédentes, **caractérisé en ce que** lors du mélange, le matériau de base A contenant les déchets de matière plastique, le matériau X et le composant de charge Z sont mélangés dans un mélangeur ou dans une installation mélangeuse et / ou le transport et le traitement thermique ont lieu dans une machine d'injection ou dans une extrudeuse.

17. Procédé selon l'une quelconque des revendications précédentes, **caractérisé en ce que** le composant de charge est ajouté en une quantité comprise entre 0,1 et 5 % par rapport au volume du mélange constitué de A et de X.

18. Procédé selon la revendication 17, **caractérisé en ce que** le composant de charge est ajouté en une quantité comprise entre 0,3 et 3 % par rapport au volume du mélange constitué de A et de X.

19. Procédé selon l'une quelconque des revendications précédentes, **caractérisé en ce que** le composant de charge comprend de l'huile de lin et / ou de l'huile de maïs.

20. Procédé selon l'une quelconque des revendications précédentes, **caractérisé en ce que** le mélange et le traitement thermique ont lieu dans une machine d'injection ou une extrudeuse.

21. Procédé selon l'une quelconque des revendications précédentes, **caractérisé en ce que** le mélange traité par voie thermique sortant de la buse est formé et laissé à refroidir.

22. Procédé selon la revendication 21, **caractérisé en ce que**, à partir du mélange traité par voie thermique sortant de la buse, on forme des plaques, feuilles, tiges, pieux, poutres, tubulures, tuyaux, éléments de planchéiage, de revêtement ou d'isolation, gaines, éléments de protection oculaire ou thermique, ainsi que des éléments pour la protection contre les dommages mécaniques, des pièces formées destinées à remplir les cavités, éléments de construction, tuiles, éléments de support, tuiles en S, pavés, dalles pour le gazon, éléments d'outils ou éléments d'assemblage flexibles ou présentant une forme stable.

23. Utilisation d'acides gras, de mélanges contenant des acides gras, de dérivés d'acides gras ou d'alcools gras libérant des acides gras dans les conditions du procédé, notamment de l'huile de lin et / ou de l'huile de maïs, en tant que composant de charge pour un mélange contenant une matière plastique lors de la préparation / du traitement et de la valorisation dans un procédé selon l'une quelconque des revendications 1 à 22.
